# EUROPÄISCHE PATENTANMELDUNG

(11) **EP 0 911 244 A2**
(43) Veröffentlichungstag der Anmeldung: **28.04.1999**
(21) Anmeldenummer: 98117890.8
(22) Anmeldetag: 22.09.1998
(51) Int. Cl.: B62D 1/18

(54) **Lenkanlage für ein Kraftfahrzeug**

(30) Priorität: 23.10.1997 DE 19746790
(71) Anmelder: DaimlerChrysler AG, 70567 Stuttgart (DE)
(72) Erfinder: Wolpert, Engelbert, 70176 Stuttgart (DE)

(57) **Zusammenfassung**

Beim Stand der Technik ist es bekannt, einen ersten, mit einer unteren Lenkspindel verbundenen Lenkspindelteil einer oberen Lenkspindelanordnung karosseriefest zu lagern.

Erfindungsgemäß ist der erste Lenkspindelteil relativ zu karosseriefesten Lagerpunkten der oberen Lenkspindelanordnung axial verschiebbar angeordnet.

Einsatz für Personenkraftwagen.

## Beschreibung

Die Erfindung betrifft eine Lenkanlage für ein Kraftfahrzeug mit einer unteren Lenkspindel und einer oberen Lenkspindelanordnung, die zwei axial ineinandergreifende und gegeneinander verschiebbare, drehschlüssig miteinander verbundene Lenkspindelteile aufweist, wobei ein erster Lenkspindelteil gelenkig mit der unteren Lenkspindel verbunden ist.

Eine solche Lenkanlage ist aus der DE 40 30 406 C2 bekannt. Die bekannte Lenkanlage weist eine untere Lenkspindel auf, die zweigeteilt ist, wobei die beiden Lenkspindelteile mittels entsprechender Verzahnungen als teleskopartige Verschiebeverbindung gestaltet sind. Die untere Lenkspindelanordnung ist über ein Kreuzgelenk mit der oberen Lenkspindelanordnung verbunden, die innerhalb einer Mantelrohreinheit drehbar gelagert ist. Auch die obere Lenkspindelanordnung ist in zwei Lenkspindelteile unterteilt, die über eine Verzahnung axial ineinander verschiebbar gelagert sind. Ein erster, an das Kreuzgelenk anschließende Lenkspindelteil ist mittels einer Lagerund in der Mantelrohreinheit karosseriefest gelagert. Der zweite, obere Lenkspindelteil, der das Lenkrad trägt, ist relativ zu der Mantelrohreinheit und relativ zu dem ersten Lenkspindelteil axial verschiebbar gehalten. Dadurch ist eine Axialverstellung des Lenkrades - auf die Lenkspindelachse betragen - möglich.

Aufgabe dem Erfindung ist es, eine Lenkanlage der eingangs genannten Art zu schaffen, die mit einfachen Mitteln einen Toleranzausgleich bei der fahrzeugfesten Montage der Lenkanlage ermöglicht.

Diese Aufgabe wird dadurch gelöst, daß der erste Lenkspindelteil relativ zu einem karosseriefesten Lagerpunkt der oberen Lenkspindelanordnung axial verschiebbar gelagert ist. Durch die erfindungsgemäße Lösung wird nur noch eine einzelne Verschiebeanordnung im Bereich der oberen Lenkspindelanordnung benötigt, die Toleranzausgleiche bei der fahrzeugfesten Montage der Lenkanlage ermöglicht. Durch die axial verschiebbare Anordnung des ersten Lenkspindelteiles ist es nämlich möglich, die untere Lenkspindel einstückig ohne eigenen Toleranzausgleich auszuführen und dennoch Einbautoleranzen zwischen der karosseriefesten Anordnung des zweiten Lenkspindelteiles und dem Lenkgetriebe im Vorderachsbereich aufzunehmen. Die untere Lenkspindel und der erste Lenkspindelteil der oberen Lenkspindelanordnung bilden durch die erfindungsgemäße Lösung eine Einheit, die relativ zum zweiten Lenkspindelteil und relativ zu einem Mantelrohr der Lenkanlage verschiebbar und damit toleranzausgleichend angeordnet sind. Die karosseriefeste Lagerung der oberen Lenkspindelanordnung ermöglicht gleichzeitig eine axiale Verstellung relativ zu dem karosseriefesten Lagerpunkt, so daß die Axialverstellung des Lenkrades gewährleistet ist, wobei in der jeweils eingestellten Axialposition wieder eine karosseriefeste Anordnung gegeben ist.

In Ausgestaltung der Erfindung ist der zweite Lenkspindelteil karosseriefest gelagert und in unterschiedlichen Axialpositionen relativ zu dem karosseriefesten Lagerpunkt positionierbar. Dadurch wird die einfache Axialverstellung des zweiten, das Lenkrad tragenden Lenkspindelteiles erzielt, wobei die axiale Verschiebbarkeit der Lenkspindelteile zueinander sowohl den Toleranzausgleich als auch die Axialverschiebung des Lenkrades aufnimmt.

In weiterer Ausgestaltung der Erfindung ist die obere Lenkspindelanordnung um einen karosseriefesten Lagerpunkt mit in Fahrzeugquerrichtung verlaufender, horizontaler Schwenkachse schwenkbeweglich gelagert. Dadurch ist ergänzend eine Höhenverstellung des Lenkrades im Fahrzeuginnenraum möglich.

In weiterer Ausgestaltung der Erfindung ist die untere Lenkspindel mit einer energieabsorbierenden Deformationseinrichtung, insbesondere mit wenigstens einem energieabsorbierenden Wellrohr, versehen. Dadurch ist es möglich, bereits im Bereich der unteren Lenkspindel Aufprallbelastungen auf die Lenkanlage energieabsorbierend aufzunehmen. Ergänzend können auch im Bereich der oberen Lenkspindelanordnung noch weitere energieabsorbierende Deformationselemente vorgesehen sein.

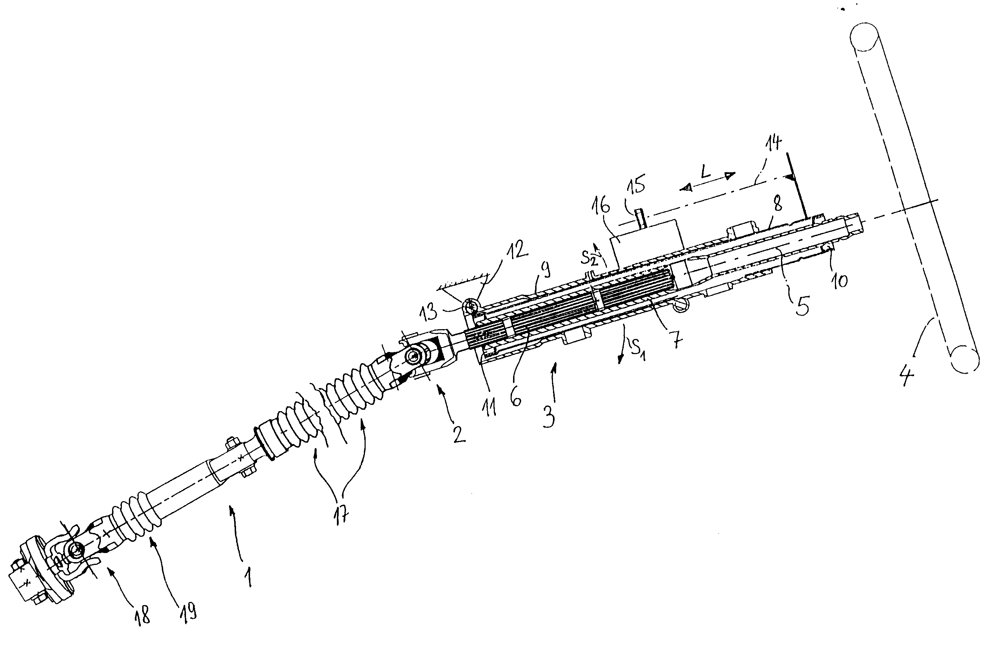

Weitere Vorteile und Merkmale der Erfindung ergeben sich aus den Ansprüchen sowie aus der nachfolgenden Beschreibung eines bevorzugten Ausführungsbeispieles der Erfindung, das anhand der Zeichnung dargestellt ist.

Die einzige Zeichnung zeigt in einer Seitenansicht eine Ausführungsform einer erfindungsgemäßen Lenkanlage, wobei eine obere Lenkspindelanordnung in einem Längsschnitt dargestellt ist.

Eine Lenkanlage für ein Kraftfahrzeug, insbesondere für einen Personenkraftwagen, weist eine untere Lenkspindel 1 auf, die mit ihrem unteren Ende über ein Kreuzgelenk 18 in nicht dargestellter Weise an ein Lenkgetriebe in einem Vorderachsbereich des Kraftfahrzeuges angeschlossen ist. Die untere Lenkspindel 1 ist einteilig gestaltet und weist zwei energieabsorbierende Wellrohre 17 und 19 auf. Die untere Lenkspindel 1 ist über ein Kreuzgelenk 2 mit einem ersten Lenkspindelteil 6 einer oberen Lenkspindelanordnung 6, 7 verbunden, die - auf eine Lenkspindelachse 5 bezogen - axial verschiebbar in dem zweiten Lenkspindelteil 7 gelagert ist. Die beiden Lenkspindelteile 6 und 7 greifen teleskopartig ineinander und sind über eine Umfangsverzahnung zwar axial verschiebbar zueinander, jedoch drehschlüssig miteinander verbunden. Der den ersten Lenkspindelteil 6 hülsenförmig übergreifende zweite Lenkspindelteil 7 ist mittels zweier Lagerungen 10 und 11 karosseriefest - auf die Lenkspindelachse 5 bezogen - in einer Mantelrohreinheit 3 gehalten. Dabei weist die Mantelrohreinheit 3 ein inneres Mantelrohr 8 und ein äußeres Mantelrohr 9 auf, die koaxial ineinander geschoben sind. Der zweite Lenkspindelteil 7 ist in seinem unteren und in seinem oberen Stirnbereich mittels der beiden Lagerungen 10 und 11 in dem inneren Mantelrohr 8 drehbar gelagert, wodurch sich aufgrund der großen Lagerungsabstände eine hohe Steifigkeit und eine hohe Eigenfrequenz für die obere Lenkspindelanordnung ergibt. Der zweite Lenkspindelteil 7 trägt in an sich bekannter Weise ein Lenkrad 4, das in einen Fahrzeuginnenraum hineinragt.

Das äußere Mantelrohr 9 ist beim dargestellten Ausführungsbeispiel auf Höhe seines unteren Stirnendes und damit auf Höhe eines unteren Stirnendes des zweiten Lenkspindelteiles 7 um eine horizontale und in Fahrzeugquerrichtung verlaufende Schwenkachse 13 an einem karosseriefesten Trägerteil 12 schwenkbeweglich gelagert. Dadurch ist die Mantelrohreinheit 3 in Richtung der Pfeile S₁ und S₂ verschwenkbar, wobei die entsprechende Verstell- und Stützeinrichtung für die Mantelrohreinheit 3 nicht dargestellt ist. Durch die Verschwenkbarkeit der Mantelrohreinheit 3 ist eine Höhenverstellung des Lenkrades 4 möglich. Ergänzend ist das Lenkrad 4 längs der Lenkspindelachse 5 axial verstellbar. Hierzu ist das innere Mantelrohr 8 relativ zu dem äußeren karosseriefest gelagerten Mantelrohr 9 axial verstellbar angeordnet. Dazu ist dem inneren Mantelrohr 8 starr und achsparallel eine Gewindespindel 14 zugeordnet, die in eine drehbar am äußeren Mantelrohr 9 gelagerte Gewindemutter 15 eingreift. Die Gewindemutter 15 ist über ein nicht näher dargestelltes Getriebe von einem Elektromotor 16 angetrieben, der auf dem äußeren Mantelrohr 9 festgelegt ist. Durch den derart gestalteten Spindeltrieb ist es möglich, das innere Mantelrohr 8 und damit auch den in diesem gelagerten zweiten Lenkspindelteil 7 relativ zu dem karosseriefest gelagerten Mantelrohr 9 koaxial zur Lenkspindelachse 5 längs des Doppelpfeiles L axial zu verstellen. Dadurch erfolgt auch eine Längsverstellung des Lenkrades 4. Die selbsthemmende Gestaltung des Spindeltriebes gewährleistet eine karosseriefeste Positionierung des inneren Mantelrohres 8 und damit auch des zweiten Lenkspindelteiles 7, nachdem eine entsprechende Axialposition für das Lenkrad 4 eingestellt worden ist.

Da der erste Lenkspindelteil 6 relativ zu der Mantelrohreinheit 3 und relativ zu dem zweiten Lenkspindelteil 7 aufgrund der einfachen Umfangsverzahnung ohne eine eigene, zusätzliche Lagerung axial verschiebbar gelagert ist, ist es möglich, im Bereich der Verzahnung Toleranzen auszugleichen, die beim Einbau der Lenkanlage zwischen dem vorderachsseitig positionierten Lenkgetriebe und der karosseriefesten Anordnung der Mantelrohreinheit 3 auftreten können. Alle auftretenden Toleranzen werden zwischen dem ersten Lenkspindelteil 6 und dem zweiten Lenkspindelteil 7 ausgeglichen, ohne daß für die untere Lenkspindel 1 zusätzliche Axialverschiebemöglichkeiten vorgesehen sein müssen.

## Patentansprüche

1. Lenkanlage für ein Kraftfahrzeug mit einer unteren Lenkspindel und einer oberen Lenkspindelanordnung, die zwei axial ineinandergreifende und gegeneinander verschiebbare, drehschlüssig miteinander verbundene Lenkspindelteile aufweist, wobei ein erster Lenkspindelteil gelenkig mit der unteren Lenkspindel verbunden ist,
**dadurch gekennzeichnet, daß**
der erste Lenkspindelteil (6) relativ zu einem karosseriefesten Lagerpunkt (12, 13) der oberen Lenkspindelanordnung (6, 7) axial verschiebbar gelagert ist.

2. Lenkanlage nach Anspruch 1,
**dadurch gekennzeichnet, daß**
der zweite Lenkspindelteil (7) karosseriefest gelagert und in unterschiedlichen Axialpositionen relativ zu dem karosseriefesten Lagerpunkt positionierbar ist.

3. Lenkanlage nach Anspruch 1 oder 2,
**dadurch gekennzeichnet, daß**
die obere Lenkspindelanordnung (6, 7) um den karosseriefesten Lagerpunkt (12, 13) mit in Fahrzeugquerrichtung verlaufender, horizontaler Schwenkachse (13) schwenkbeweglich gelagert ist.

4. Lenkanlage nach Anspruch 3,
**dadurch gekennzeichnet, daß**
der karosseriefeste Lagerpunkt (12, 13) auf Höhe eines unteren Stirnendes des zweiten Lenkspindelteiles (7) angeordnet ist.

5. Lenkanlage nach einem der vorhergehenden Ansprüche,
**dadurch gekennzeichnet, daß**
die untere Lenkspindel (1) mit einer energieabsorbierenden Deformationseinrichtung, insbesondere mit wenigstens einem energieabsorbierenden Wellrohr (17, 19), versehen ist.
